# EUROPEAN PATENT APPLICATION

(11) **EP 3 780 797 A1**
(43) Date of publication of application: **17.02.2021**
(21) Application number: 18913402.6
(22) Date of filing: 06.04.2018
(51) Int. Cl.: H04W 72/04, H04W 28/04

(54) **USER TERMINAL AND WIRELESS BASE STATION**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/014826
(87) International publication number: WO 2019/193768

(57) **Abstract**

A user terminal according to one aspect of the present disclosure includes: a receiving section that uses a first BWP in a partial frequency band (BWP (Bandwidth Part)) configured within a carrier to receive downlink control information including information indicating a second BWP being different from the first BWP; and a control section that, when a resource allocation field of the downlink control information indicates a specific value, activates the second BWP, and does not perform a transmitting and receiving process for the second BWP based on the resource allocation field. According to one aspect of the present disclosure, throughput of radio communication can be enhanced by using a partial frequency band in DL/UL communication.

## Description

### Technical Field

The present disclosure relates to a user terminal and a radio base station in next-generation mobile communication systems.

### Background Art

In the UMTS (Universal Mobile Telecommunications System) network, the specifications of Long Term Evolution (LTE) have been drafted for the purpose of further increasing high speed data rates, providing lower latency and so on (see Non-Patent Literature 1). Further, for the purpose of further widening the band and increasing the speed beyond LTE, successor systems of LTE (for example, also referred to as LTE-A (LTE-Advanced), FRA (Future Radio Access), 4G, 5G, 5G+ (plus), NR (New RAT), LTE Rel. 14, Rel. 15 and later versions, and so on) are also under study.

Further, in existing LTE systems (for example, LTE Rel. 8 to Rel. 13), downlink (DL) and/or uplink (UL) communication is performed with a subframe of 1 ms being a scheduling unit. For example, in a case of a normal cyclic prefix (NCP), the subframe consists of 14 symbols with a subcarrier spacing of 15 kHz. The subframe is also referred to as a transmission time interval (TTI) and so on.

Further, a user terminal (UE (User Equipment)) controls reception of a DL data channel (for example, also referred to as a PDSCH (Physical Downlink Shared Channel), a DL shared channel, and so on), based on downlink control information (DCI) (also referred to as a DL assignment and so on) from a radio base station (for example, an eNB (eNodeB)). Further, the user terminal controls transmission of a UL data channel (for example, also referred to as a PUSCH (Physical Uplink Shared Channel), a UL shared channel, and so on), based on DCI (also referred to as a UL grant and so on) from the radio base station.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), the following operation is under study: the user terminal monitors (performs blind decoding on) a control resource region (for example, a control resource set (CORESET)) being a candidate region in which a DL control channel (for example, a PDCCH (Physical Downlink Control Channel)) is allocated so as to receive (detect) DCI.

For the future radio communication systems, the following operation is also under study: one or more partial frequency bands (also referred to as partial bands, bandwidth parts (BWPs), and so on) within a carrier (also referred to as a component carrier (CC), a system band, and so on) are used for DL and/or UL communication (DL/UL communication). It is desirable that throughput of radio communication be enhanced by using such partial frequency band(s) in DL/UL communication.

The present disclosure has an object to provide a user terminal and a radio base station capable of enhancing throughput of radio communication by using a partial frequency band in DL/UL communication.

### Solution to Problem

A user terminal according to one aspect of the present disclosure includes: a receiving section that uses a first BWP in a partial frequency band (BWP (Bandwidth Part)) configured within a carrier to receive downlink control information including information indicating a second BWP being different from the first BWP; and a control section that, when a resource allocation field of the downlink control information indicates a specific value, activates the second BWP, and does not perform a transmitting and receiving process for the second BWP based on the resource allocation field.

### Advantageous Effects of Invention

According to one aspect of the present disclosure, throughput of radio communication can be enhanced by using a partial frequency band in DL/UL communication.

### Brief Description of Drawings

FIGS. 1A to 1C are each a diagram to show an example of a configuration scenario of BWP(s);
FIG. 2 is a diagram to show an example of control of activation/deactivation of BWPs;
FIG. 3 is a diagram to show an example of control of activation or deactivation of one or more BWPs in an SCell;
FIG. 4 is a diagram for describing a method of determining a frequency-domain RA field according to a first aspect of the present embodiment;
FIG. 5A and FIG. 5B are each a diagram for describing an operation of receiving downlink control information by using a determined frequency-domain RA field according to the first aspect of the present embodiment;
FIG. 6 is a diagram for describing a method of determining a frequency-domain RA field according to the first aspect of the present embodiment;
FIG. 7 is a diagram for describing a method of determining a frequency-domain RA field according to a second aspect of the present embodiment;
FIG. 8A and FIG. 8B are each a diagram for describing an operation of receiving downlink control information by using a determined frequency-domain RA field according to the second aspect of the present embodiment;
FIG. 9 is a diagram for describing a method of determining a frequency-domain RA field according to the second aspect of the present embodiment;
FIG. 10 is a diagram to show an example of resource allocation according to a third aspect;
FIG. 11 is a diagram to show an example of BWP switching (cross BWP scheduling) with scheduling;
FIG. 12 is a diagram to show an example of BWP switching without scheduling according to a fourth aspect;
FIG. 13 is a diagram to show an example of HARQ-ACK transmission for DL DCI for null assignment indicating BWP switching according to the fourth aspect;
FIG. 14 is a diagram to show an example of a schematic structure of a radio communication system according to the present embodiment;
FIG. 15 is a diagram to show an example of an overall structure of a radio base station according to the present embodiment;
FIG. 16 is a diagram to show an example of a functional structure of the radio base station according to the present embodiment;
FIG. 17 is a diagram to show an example of an overall structure of a user terminal according to the present embodiment;
FIG. 18 is a diagram to show an example of a functional structure of the user terminal according to the present embodiment; and
FIG. 19 is a diagram to show an example of a hardware structure of the radio base station and the user terminal according to the present embodiment.

### Description of Embodiments

For the future radio communication systems (for example, NR, 5G, or 5G+), allocating a carrier (also referred to as a component carrier (CC), a cell, a system band, or the like) having a bandwidth (for example, 100 to 800 MHz) wider than the bandwidth of the existing LTE systems (for example, LTE Rel. 8 to Rel. 13) is under study.

Meanwhile, in the future radio communication systems, it is assumed that a user terminal (also referred to as a Wideband (WB) UE, a single carrier WB UE, or the like) having capability of transmission and/or reception (transmission and reception) in the entire carrier and a user terminal (also referred to as a BW (Bandwidth) reduced UE or the like) not having capability of transmission and reception in the entire carrier coexist.

As described above, in the future radio communication systems, coexistence of a plurality of user terminals that support different bandwidths (various BW UE capabilities) is assumed. Therefore, semi-statically configuring one or more partial frequency bands within a carrier is under study. Each frequency band (for example, 50 MHz, 200 MHz, or the like) within the carrier is referred to as a partial band or a bandwidth part (BWP) or the like.

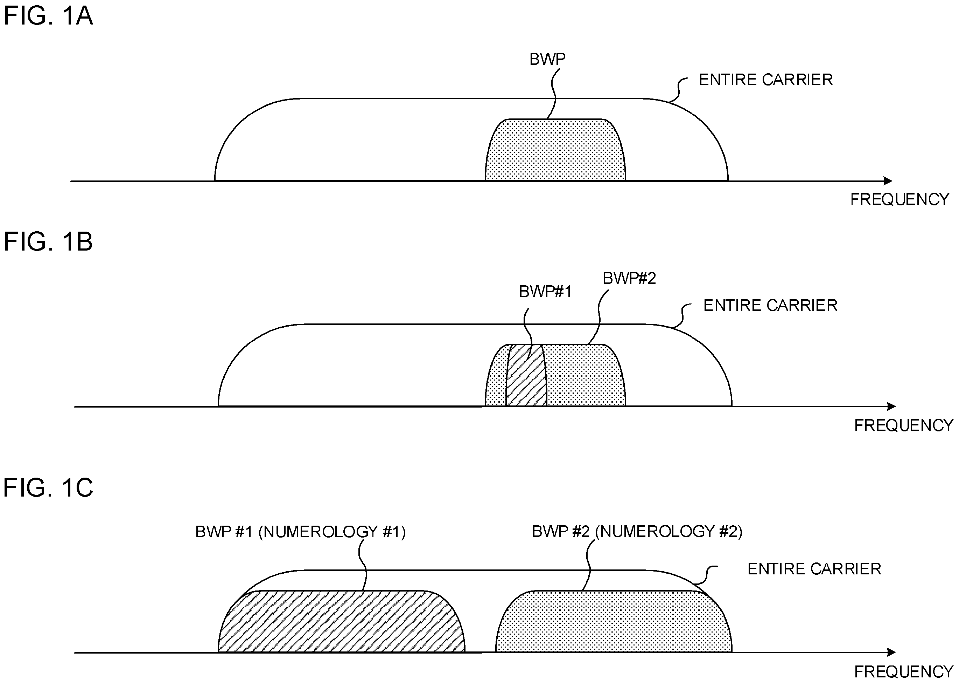

FIGS. 1A to 1C are each a diagram to show an example of a configuration scenario of BWP(s). FIG. 1A shows a scenario (Usage scenario #1) in which one BWP is configured for the user terminal within one carrier. For example, in FIG. 1A, a BWP of 200 MHz is configured within a carrier of 800 MHz. Activation or deactivation of the BWP may be controlled.

Here, the activation of the BWP refers to a state in which the BWP is available (or transitioning the BWP to the available state), and is also referred to as activation or enabling of configuration information (configuration) of the BWP (BWP configuration information) or the like. Here, the deactivation of the BWP refers to a state in which the BWP is unavailable (or transitioning the BWP to the unavailable state), and is also referred to as deactivation or disabling of BWP configuration information or the like. When a BWP is scheduled, the BWP is activated.

FIG. 1B shows a scenario (Usage scenario #2) in which a plurality of BWPs are configured for the user terminal within one carrier. As shown in FIG. 1B, at least a part of the plurality of BWPs (for example, BWPs #1 and #2) may overlap each another. For example, in FIG. 1B, BWP #1 is a partial frequency band of BWP #2.

Activation or deactivation of at least one of the plurality of BWPs may be controlled. The number of BWPs activated at certain time may be limited (for example, only one BWP may be active at certain time). For example, in FIG. 1B, only either one of BWP #1 or #2 is active at certain time.

For example, in FIG. 1B, when transmission and reception of data is not performed, BWP #1 may be activated, whereas when transmission and reception of data is performed, BWP #2 may be activated. Specifically, when data to be transmitted and received is generated, switching from BWP #1 to BWP #2 may be performed, and when the transmission and reception of the data ends, switching from BWP #2 to BWP #1 may be performed. In this manner, the user terminal need not constantly monitor BWP #2 having a bandwidth wider than the bandwidth of BWP #1. As a result, power consumption can be reduced.

Note that, in FIGS. 1A and 1B, the network (for example, the radio base station) need not assume that the user terminal performs reception and/or transmission outside the active BWP. Note that, in FIG. 1A, there is no limitation as to operation that the user terminal supporting the entire carrier receives and/or transmits a signal outside the BWP.

FIG. 1C shows a scenario (Usage scenario #3) in which a plurality of BWPs are configured in different bands within one carrier. As shown in FIG. 1C, different numerologies may be applied to the plurality of BWPs. Here, the numerology may be at least one of a subcarrier spacing, a symbol length, a slot length, a cyclic prefix (CP) length, a slot (transmission time interval (TTI)) length, the number of symbols in each slot, and so on.

For example, in FIG. 1C, BWPs #1 and #2 having different numerologies are configured for the user terminal having capability of transmission and reception in the entire carrier. In FIG. 1C, at least one BWP configured for the user terminal is activated or deactivated, and one or more BWPs may be active at certain time.

Note that the BWP used for DL communication may be referred to as a DL BWP (frequency band for DL), and the BWP used for UL communication may be referred to as a UL BWP (frequency band for UL). At least a part of a frequency band of the DL BWP and the UL BWP may overlap each other. The DL BWP and the UL BWP are hereinafter collectively referred to as the BWP, unless they are distinguished from each other.

At least one DL BWP (for example, a DL BWP included in a primary CC) configured for the user terminal may include control resource regions being allocation candidates of a DL control channel (DCI). The control resource region may be referred to as a control resource set (CORESET), a control subband, a search space set, a search space resource set, a control region, an NR-PDCCH region, or the like.

The user terminal monitors one or more search spaces in the CORESET, and detects DCI for the user terminal. The search space may include a common search space (CSS) in which DCI common to one or more user terminals (for example, group DCI or common DCI) is mapped and/or a user terminal (UE)-specific search space (USS (UE-specific Search Space)) in which DCI specific to a user terminal (for example, a DL assignment and/or a UL grant) is mapped.

The user terminal may receive configuration information of the CORESET (CORESET configuration information) by using higher layer signaling (for example, RRC (Radio Resource Control) signaling or the like). The CORESET configuration information may indicate at least one of frequency resources (for example, the number of RBs and/or a start RB index or the like) of each CORESET, time resources (for example, a start OFDM symbol number), duration, a REG (Resource Element Group) bundle size (REG size), a transmission type (for example, interleaving or non-interleaving), periodicity (for example, monitoring periodicity of each CORESET), and so on.

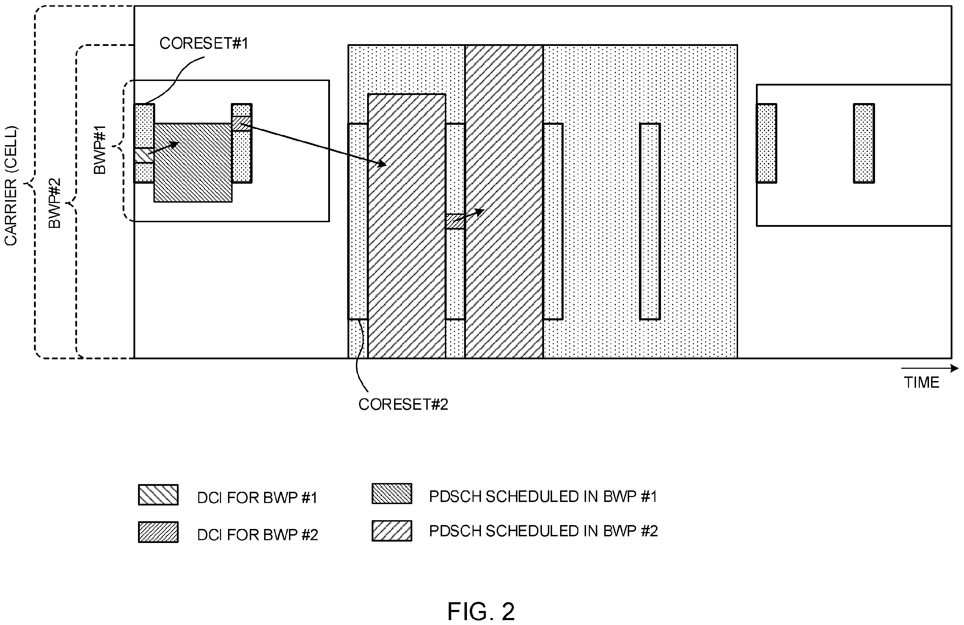

With reference to FIG. 2, control of activation and/or deactivation (also referred to as activation/deactivation or switching, determination, or the like) of the BWP will be described. FIG. 2 is a diagram to show an example of control of activation/deactivation of BWPs. Note that, in FIG. 2, the scenario shown in FIG. 1B is assumed. However, the control of activation/deactivation of the BWP can be applied to the scenarios shown in FIGS. 1A and 1C as appropriate, for example.

In FIG. 2, it is assumed that CORESET #1 is configured in BWP #1, and CORESET #2 is configured in BWP #2. One or more search spaces are provided in each of CORESET #1 and CORESET #2. For example, in CORESET #1, DCI for BWP #1 and DCI for BWP #2 may be mapped in the same search space, or may be mapped in search spaces different from each other.

In FIG. 2, when BWP #1 is in an active state, the user terminal monitors (performs blind decoding on) the search spaces in CORESET #1 of certain periodicity (for example, for every one or more slots, for every one or more mini-slots, or for every certain number of symbols) to detect DCI for the user terminal.

The DCI may include information (BWP information) indicating association between the DCI and a BWP. The BWP information is, for example, an index of the BWP, and may be a certain field value in DCI. The BWP index information may be included in DCI for downlink scheduling, may be included in DCI for uplink scheduling, or may be included in DCI of a common search space. The user terminal may determine the BWP used to schedule the PDSCH or the PUSCH with the DCI, based on the BWP information in the DCI.

When the user terminal detects DCI for BWP #1 in CORESET #1, the user terminal receives the PDSCH scheduled (allocated) in certain time and/or frequency resources (time/frequency resources) in BWP #1, based on the DCI for BWP #1.

When the user terminal detects DCI for BWP #2 in CORESET #1, the user terminal deactivates BWP #1, and activates BWP #2. The user terminal receives the PDSCH scheduled in certain time/frequency resources of DL BWP #2, based on the DCI for BWP #2 detected in CORESET #1.

Note that, in FIG. 2, the DCI for BWP #1 and the DCI for BWP #2 are detected at different timings in CORESET #1. However, a plurality of pieces of DCI having different BWPs may be detectable at the same timing. For example, a plurality of search spaces respectively corresponding to a plurality of BWPs may be provided in CORESET #1, and a plurality of pieces of DCI having BWPs different from each other may be transmitted in the plurality of search spaces. The user terminal may monitor the plurality of search spaces in CORESET #1, and detect the plurality of pieces of DCI having different BWPs at the same timing.

When BWP #2 is activated, the user terminal monitors (performs blind decoding on) the search spaces in CORESET #2 of certain periodicity (for example, for every one or more slots, for every one or more mini-slots, or for every certain number of symbols), and detects DCI for BWP #2. The user terminal may receive the PDSCH scheduled in certain time/frequency resources of BWP #2, based on the DCI for BWP #2 detected in CORESET #2.

Note that, in FIG. 2, certain time is shown for switching of activation or deactivation. However, the certain time is not necessarily needed.

As shown in FIG. 2, when BWP #2 is activated with detection of the DCI for BWP #2 in CORESET #1 being a trigger, BWP #2 can be activated without explicit indication information. As a result, increase in overhead due to control of activation can be prevented.

On the other hand, in FIG. 2, even if the user terminal misses detecting the DCI for BWP #2 (specifically, DCI for activation of BWP #2) in CORESET #1, the radio base station cannot recognize the detection miss. For this reason, although the user terminal continues monitoring CORESET #1 of BWP #1, the radio base station may falsely recognize that the user terminal can use BWP #2 and transmit DCI for scheduling the PDSCH in BWP #2 in CORESET #2.

In this case, when the radio base station fails to receive transmission confirmation information (also referred to as an HARQ-ACK, an ACK/NACK, an A/N, or the like) of the PDSCH within a certain period of time, the radio base station may recognize that the user terminal missed detecting the DCI for activation of BWP #2 and retransmit the DCI for activation in CORESET #1. Alternatively, in FIG. 2, although not shown, a CORESET common to BWPs #1 and #2 may be provided.

When a data channel (for example, a PDSCH and/or a PUSCH) is not scheduled for a certain period of time in an activated BWP, the BWP may be deactivated. For example, in FIG. 2, the PDSCH is not scheduled for a certain period of time in DL BWP #2, and thus the user terminal deactivates BWP #2 and activates BWP #1.

In an activated BWP, the user terminal may configure a timer each time reception of a data channel (for example, a PDSCH and/or a PUSCH) is completed, and may deactivate the BWP when the timer expires. The timer may be a timer (also referred to as a joint timer or the like) used for the DL BWP and the UL BWP in common, or may be individual timers.

When a timer is used for deactivation of the BWP, explicit indication information for deactivation need not be transmitted. As a result, overhead due to control of deactivation can be reduced.

Incidentally, a maximum number of BWPs that can be configured in each carrier may be determined in advance. For example, in frequency division duplex (FDD) (paired spectrum), a maximum of four DL BWPs and a maximum of four UL BWPs may be configured in each carrier.

In contrast, in time division duplex (TDD) (unpaired spectrum), a maximum of four pairs of DL BWP and UL BWP may be configured in each carrier. Note that, in TDD, the DL BWP and the UL BWP to form a pair may have different bandwidths with the same center frequency.

In the above description, a single carrier is shown. However, a plurality of carriers (also referred to as cells, serving cells, or the like) may be aggregated (for example, carrier aggregation (CA) and/or dual connectivity (DC)). As described above, one or more BWPs may be configured for at least one of the plurality of carriers.

When a plurality of cells are aggregated by means of CA or DC, the plurality of cells may include a primary cell (PCell) and one or more secondary cells (SCells). The PCell corresponds to a single carrier (CC), and may include one or more BWPs. Each of the SCells corresponds to a single carrier (CC), and may include one or more BWPs.

In each BWP of the PCell, a common search space for a random access procedure (RACH (Random Access Channel Procedure)) may be provided. In a similar manner, in each BWP of the PCell, a common search space for fallback, a common search space for paging, or a common search space for RMSI (Remaining Minimum System Information) may be provided.

In each BWP of one or more cells (PCell and/or SCell), a common search space for a PDCCH common to one or more user terminals (group-common PDCCH) may be provided.

A specific BWP may be defined for the user terminal in advance. For example, a BWP (initial active BWP) in which a PDSCH for transmitting system information (for example, RMSI) is scheduled may be defined by a frequency position and a bandwidth of a CORESET in which DCI for scheduling the PDSCH is mapped. The same numerology as the RMSI may be applied to the initial active BWP.

A default BWP may be defined for the user terminal. The default BWP may be the initial active BWP described above, or may be configured by using higher layer signaling (for example, RRC signaling).

Next, control of activation/deactivation of the BWP in the SCell will be described. Based on results of inter-frequency measurement in the user terminal, the radio base station may configure the SCell for the user terminal and configure one or more BWPs in the SCell.

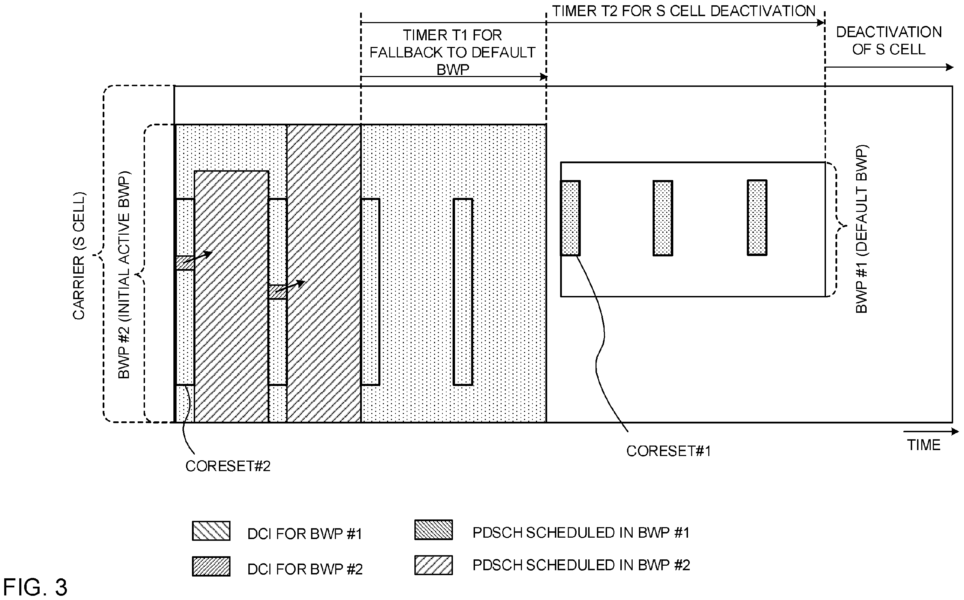

FIG. 3 is a diagram to show an example of control of activation or deactivation of one or more BWPs in the SCell. In FIG. 3, BWPs #1 and #2 in the SCell are configured for the user terminal. However, this is merely an example, and the configuration is not limited to the above configuration.

As shown in FIG. 3, in the SCell, the BWP having the wider bandwidth in a plurality of BWPs configured for the user terminal may be configured as the initial active BWP. The initial active BWP may be reported from the radio base station to the user terminal by using higher layer signaling (for example, RRC signaling).

For example, in FIG. 3, BWP #2 having a bandwidth wider than BWP #1 may be configured for (reported to) the user terminal as the initial active BWP. In FIG. 3, BWP #1 different from the initial active BWP is configured for (reported to) the user terminal as the default BWP. However, the initial active BWP and the default BWP may be configured as the same BWP.

For example, in FIG. 3, each time reception of the PDSCH in BWP #2 is completed, the user terminal may start a timer T1 for switching (fallback) to the default BWP and a timer T2 for deactivation of the SCell. For example, a time period of the timer T2 is set to be longer than a time period of the timer T1.

In FIG. 3, the user terminal monitors (performs blind decoding on) a search space in CORESET #2 of BWP #2 with certain periodicity even after starting the timers T1 and T2, but the timer T1 expires before detection of DCI. When the timer T1 expires, the user terminal deactivates BWP #2 being the initial active BWP and activates BWP #1 being the default BWP.

The user terminal monitors (performs blind decoding on) a search space in CORESET #1 of activated BWP #1 with certain periodicity, but the timer T2 expires before detection of DCI. When the timer T2 expires, all of the BWPs are deactivated, and the SCell is thus deactivated.

As described above, when all of the BWPs of the SCell are deactivated, implicitly, when the SCell is deactivated, signaling overhead for deactivating the SCell can be reduced.

As described above, in the future radio communication (for example, NR), it is assumed that a plurality of different BWPs can be configured within a carrier (cell). Here, each BWP may have a bandwidth according to an individual numerology. In other words, the number of PRBs that can be used in the BWP depends on BWP configuration and an active BWP.

Meanwhile, a frequency-domain resource allocation (RA) field is in the process of being studied. Note that, in the present disclosure, allocation and assignment may be interchangeably interpreted. Accordingly, how to implement BWP switching is also in the process of being studied. For example, when BWP cross carrier scheduling is performed (for example, when downlink control information (DCI) of the first BWP is used to schedule data of the second BWP being different from the first BWP), the size (bit width) of the frequency-domain RA field needs to be studied.

Such study needs to be carried out in consideration of the fact that the number of PRBs differs depending on a BWP as described above. This is because, for example, when a format for DCI is defined for each of a plurality of BWPs, a payload of the DCI is different for each BWP.

In view of the above, the inventors of the present invention arrived at a method of fixing the bit size (bitwidth) of the frequency-domain RA field and making a payload of DCI uniform even when a BWP different from an activated BWP is scheduled. The inventors of the present invention came up with the idea of DCI for BWP switching and operation of the UE that has detected the DCI.

One embodiment of the present disclosure will be described below with reference to the drawings. Note that, in the aspects described below, three BWPs are configured, for example. However, the number of BWPs to be configured is not limited to this number.

### (First Aspect)

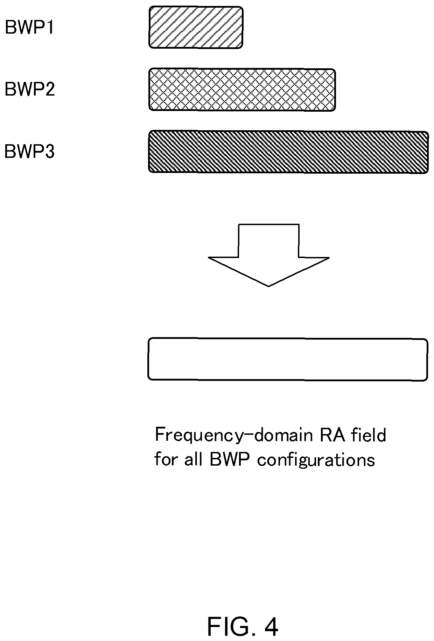

A first aspect will be described with reference to FIG. 4 to FIG. 6. First, the user terminal determines the size of the frequency-domain RA field in order to define a common DCI format, which is used regardless of which BWP data is to be scheduled. Specifically, as the size, the user terminal uses a maximum value of a necessary number of bits in all of the BWP configurations in the downlink.

To determine the size, first, the user terminal computes the size (bitwidth) necessary for the frequency-domain RA field in each BWP. The BWP configuration includes elements such as a resource allocation type, a BWP bandwidth, and an RB group (RBG) size. In consideration of all of these elements, the size necessary for the frequency-domain RA field of each BWP is computed (see FIG. 4). In FIG. 4, the sizes of three BWPs 1 to 3 are computed.

Next, the user terminal compares the computed sizes, and determines the size of the frequency-domain RA field. Specifically, the largest size of all of the computed sizes is determined as the size of the frequency-domain RA field. In FIG. 4, the size of BWP3 being the largest size out of BWPs 1 to 3 is determined as the size of the frequency-domain RA field.

Next, processing at the time of scheduling using DCI defined with the determined size of the frequency-domain RA field will be described.

The DCI includes a BWP indication field. The user terminal can judge which BWP is indicated for scheduling, based on information of the field. The user terminal can judge in which RBs (a plurality of RBs) the data is scheduled, based on information of the frequency-domain RA field.

When the number of bits (necessary number of bits) of the frequency-domain RA field of the scheduled BWP is smaller than the determined size, unused bits are generated in the frequency-domain RA field. In this case, a certain number of most significant bits (MSBs) or a certain number of least significant bits (LSBs) may be configured to certain bits (0 or 1). Alternatively, the unused bits may be fixed with certain scrambling. For example, the unused bits may be used as redundancy bits so as to check validity of used bits.

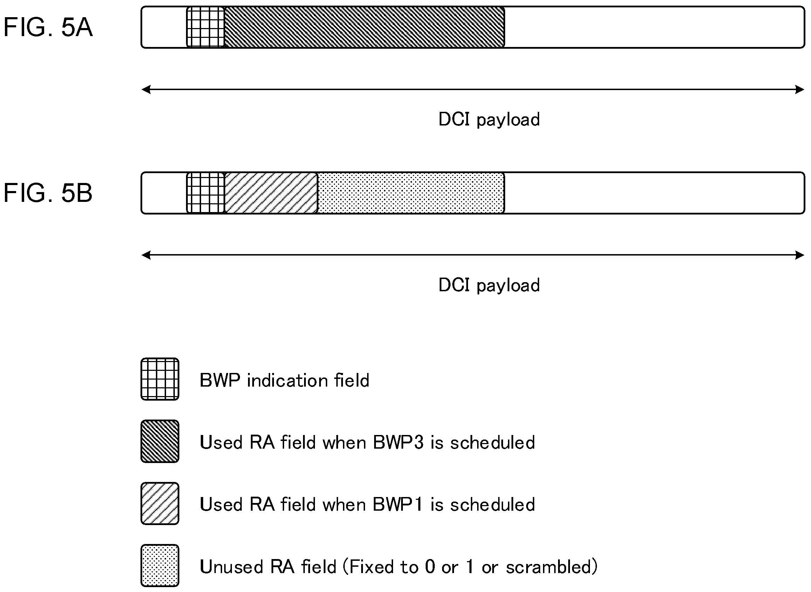

FIG. 5A shows a configuration of DCI when BWP3 is indicated in the BWP indication field. The size of BWP3 being the largest size is determined as the size of the frequency-domain RA field, and thus scheduling of BWP3 is performed by using the entire frequency-domain RA field.

FIG. 5B shows a configuration of DCI when BWP1 is indicated in the BWP indication field. The number of bits necessary in the frequency-domain RA field of BWP1 is smaller than the number of bits of BWP3, and thus unused bits are included in the frequency-domain RA field.

When a BWP different from an activated BWP is indicated in the BWP indication field (cross BWP scheduling), the user terminal activates the BWP to be scheduled, and deactivates the BWP that has been activated.

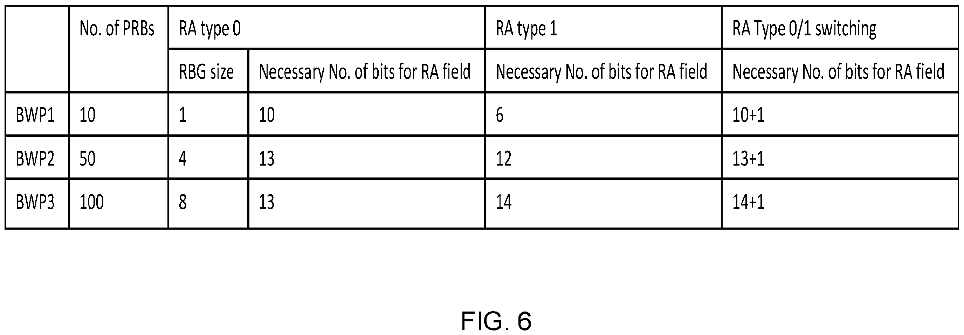

Next, the size of the frequency-domain RA field according to the first aspect is shown in a table by using examples of specific numerical values. In the table shown in FIG. 6, resource allocation (RA) types are also taken into consideration.

RA type 0 shows a bitmap format of each resource block group (RBG), and RA type 1 shows a format in which values of start and end are indicated. RA type 0/1 switching, which is used when RA types 0 and 1 are dynamically switched, is also taken into consideration.

For example, in RA type 0, the necessary number of bits of the frequency-domain RA field is 10 bits in BWP1, 13 bits in BWP2, and 13 bits in BWP3. Accordingly, in RA type 0, 13 bits is the maximum necessary number of bits of the frequency-domain RA field.

In RA type 1, the necessary number of bits of the frequency-domain RA field is 6 bits in BWP1, 12 bits in BWP2, and 14 bits in BWP3. Accordingly, in RA type 1, 14 bits is the maximum necessary number of bits of the frequency-domain RA field.

In RA type 0/1 switching, regarding the necessary number of bits of the frequency-domain RA field, 1 bit for indicating either of the types is added to the larger one of RA type 0 and RA type 1. Specifically, the number of bits is 11 bits as obtained by 10 bits + 1 bit in BWP1, 14 bits as obtained by 13 bits + 1 bit in BWP2, and 15 bits as obtained by 14 bits + 1 bit in BWP3. Accordingly, in RA type 0/1 switching, 15 bits is the maximum necessary number of bits of the frequency-domain RA field. Note that, regarding the 1 bit for indicating the RA type, 1 bit may be subtracted from the computed necessary number of bits of the frequency-domain RA field and the 1 bit may be used as the type indication field, instead of adding 1 bit to the necessary number of bits of the frequency-domain RA field. In this case, overhead of DCI can be reduced by 1 bit.

According to the first aspect described above, the bit size (bitwidth) of the frequency-domain RA field can be fixed and a payload of DCI can be made uniform even when a BWP different from an activated BWP is scheduled. The user terminal can monitor downlink control information, based on a single DCI format. Consequently, in comparison with a case of monitoring a plurality of DCI formats, processing load is reduced. As a result, power consumption can be reduced.

Note that, in downlink communication, activation of a plurality of BWPs is also under study. According to the first aspect, a common DCI format can be used among a plurality of activated BWPs. Consequently, the user terminal can monitor downlink control information, based on a single DCI format, even when a plurality of BWPs are activated. As a result, similarly to the above, processing load and power consumption can be reduced.

### (Second Aspect)

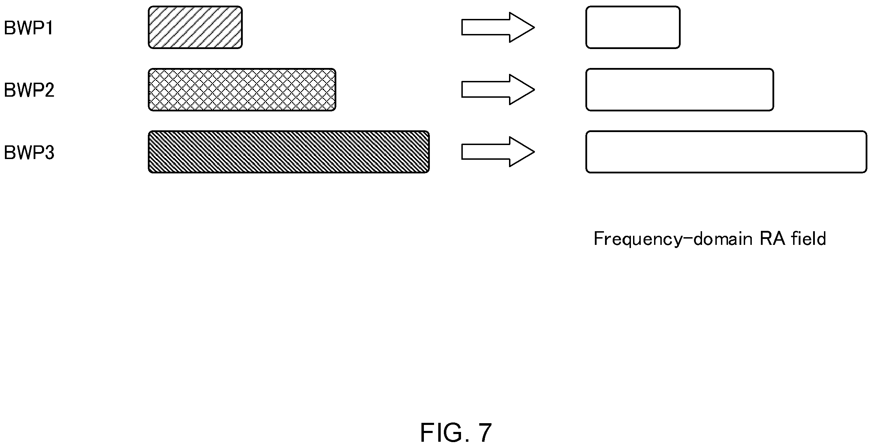

Next, a second aspect will be described with reference to FIG. 7 to FIG. 9. First, the user terminal determines (adopts) the frequency-domain RA field size according to the BWP for receiving DCI, unlike the first aspect described above. The BWP for receiving DCI refers to an activated BWP when the number of BWPs to be activated is one in downlink communication.

First, the user terminal determines the size of the frequency-domain RA field according to the BWP for receiving DCI. To determine the size, the user terminal computes the size (bitwidth) necessary for the frequency-domain RA field in each BWP. The BWP configuration includes elements such as a resource allocation type and a BWP bandwidth. The size necessary for the frequency-domain RA field of each BWP is computed for all of these elements (see FIG. 7).

In FIG. 7, the sizes of three BWPs 1 to 3 are computed. For each of BWPs 1 to 3, the computed sizes are different. When the BWP for receiving DCI is BWP1, the user terminal judges resources scheduled with the size of the frequency-domain RA field computed based on BWP1. When the BWP for receiving DCI is BWP2, the user terminal judges resources scheduled with the size of the frequency-domain RA field computed based on BWP2. When the BWP for receiving DCI is BWP3, in a similar manner, the user terminal judges resources with the size computed based on BWP3.

Accordingly, a different BWP (BWP having a necessary frequency-domain RA field size being different from an application size of a DCI format) may be scheduled with the frequency-domain RA field size applied in the BWP for receiving DCI. Next, processing at the time of scheduling using DCI defined with the size of the frequency-domain RA field according to a BWP for receiving DCI will be described.

In the second aspect, in a similar manner to the first aspect described above, the DCI includes a BWP indication field. The user terminal can judge which BWP is indicated for scheduling, based on information of the field. The user terminal can judge in which RBs (a plurality of RBs) the data is scheduled, based on information of the frequency-domain RA field.

When the number of bits (necessary number of bits) of the frequency-domain RA field of the scheduled BWP is smaller than the determined size (frequency-domain RA field size of the BWP for receiving DCI), unused bits are generated in the frequency-domain RA field. In this case, a certain number of most significant bits (MSBs) or a certain number of least significant bits (LSBs) may be configured to certain bits (0 or 1). Alternatively, the unused bits may be fixed with certain scrambling. For example, the unused bits may be used as redundancy bits so as to check validity of used bits.

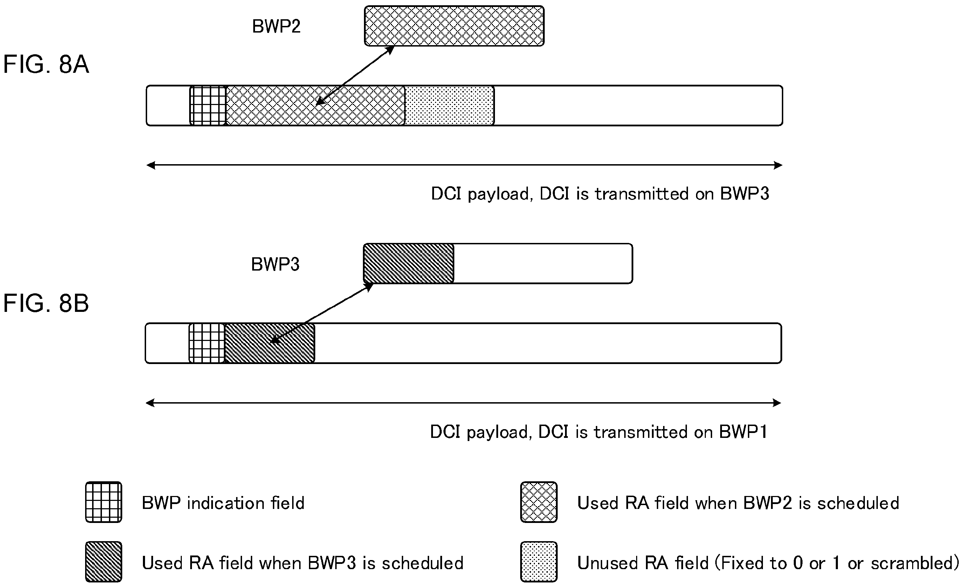

FIG. 8A shows a configuration of DCI when DCI is received in BWP3 and BWP2 is indicated in the BWP indication field. The size of BWP3 being the largest size is determined as the size of the frequency-domain RA field, and thus the entire information of the frequency-domain RA field necessary in BWP2 can be included in the DCI. Specifically, scheduling of the entire BWP2 can be indicated in the received frequency-domain RA field.

In contrast, it is conceivable that the number of bits (necessary number of bits) of the frequency-domain RA field of the scheduled BWP is larger than the determined size (frequency-domain RA field size of the BWP for receiving DCI).

For example, FIG. 8B shows a configuration of DCI when DCI is received in BWP1 and BWP3 is indicated in the BWP indication field. The size of the frequency-domain RA field based on BWP1 is smaller than the size of the frequency-domain RA field based on BWP3 (FIG. 7). Accordingly, only a part of information of the frequency-domain RA field necessary in BWP3 is included in the DCI. Information of the frequency-domain RA field necessary in BWP3 not to be included in the DCI may be configured to certain bits (0 or 1). For example, in a case of configuring to 0, scheduling of a part of BWP3 can be indicated in the received frequency-domain RA field.

When a BWP different from an activated BWP is indicated in the BWP indication field (cross BWP scheduling), the user terminal activates the BWP to be scheduled, and deactivates the BWP that has been activated.

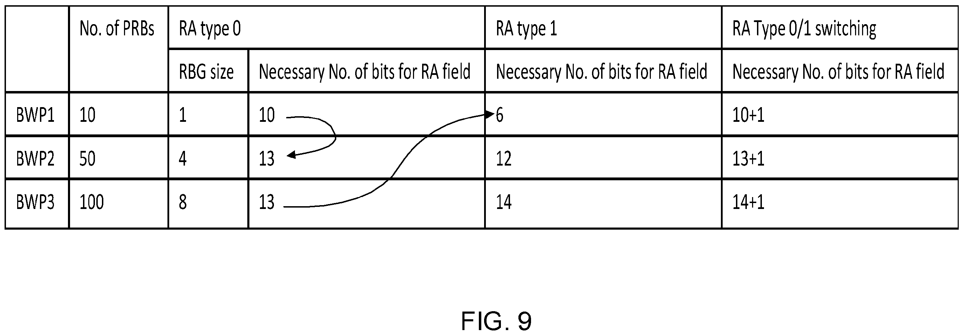

Next, the size of the frequency-domain RA field according to the second aspect is shown in a table by using examples of specific numerical values. In the table shown in FIG. 9, resource allocation (RA) types are also taken into consideration. Note that the table of FIG. 9 is merely an example, and thus the same numerical values as those in the first aspect (FIG. 6) are used as the specific numerical values.

For example, when transmission and reception of DCI is performed in BWP1, in RA type 0, the size of the frequency-domain RA field is 10 bits. In RA type 1, the size is 6 bits, and in RA type 0/1 switching, the size is 10 + 1 bits.

When transmission and reception of DCI is performed in BWP2, in RA type 0, the size of the frequency-domain RA field is 13 bits. In RA type 1, the size is 12 bits, and in RA type 0/1 switching, the size is 13 + 1 bits.

When transmission and reception of DCI is performed in BWP3, in RA type 0, the size of the frequency-domain RA field is 13 bits. In RA type 1, the size is 14 bits, and in RA type 0/1 switching, the size is 14 + 1 bits.

For example, a case in which the PDSCH of RA type 0 of BWP2 is scheduled in DCI of RA type 0 of BWP1 is assumed. The frequency-domain RA field size of the DCI is 10 bits, and the size necessary for the scheduling is 13 bits. Accordingly, the size of the frequency-domain RA field is short of 3 bits. In this case, the user terminal judges resources scheduled in the 10 bits, and the deficient 3 bits are fixed to 0 or 1 and are not used for the judgment of resources.

In this case, resources scheduled in a part of information may be configured to be shifted with an offset. According to this configuration, resources scheduled in a part of information are not fixed, thus enabling flexible scheduling with limited information. The offset may be configured by using higher layer signaling such as RRC signaling, or may be implicitly obtained based on a cell-radio network temporary identifier (C-RNTI), a user terminal identifier (UE-ID (UE Identifier)), resource information of the PDCCH (for example, a CCE index), or the like.

The size of the RBG may be configured to be changed. For example, in RA type 0 of BWP1, the RBG size is configured to 1. Changing the RBG size to 8 enables scheduling with deficient bits being supplemented. The RBG size may be configured by using higher layer signaling such as RRC signaling, or may be implicitly obtained based on a C-RNTI, a UE-ID, resource information of the PDCCH (for example, a CCE index), or the like.

A case in which the PDSCH of RA type 1 of BWP2 is scheduled in DCI of RA type 0 of BWP3 is assumed. The frequency-domain RA field size of the DCI is 13 bits, and the size necessary for the scheduling is 6 bits. Accordingly, the size necessary for the scheduling of BWP1 is satisfied, but there is an excess of 7 bits.

Regarding the 7 bits unused for the scheduling, a certain number of most significant bits (MSBs) or a certain number of least significant bits (LSBs) may be configured to certain bits (0 or 1). Alternatively, the unused bits may be fixed with certain scrambling. For example, the unused bits may be used as redundancy bits so as to check validity of used bits.

According to the second aspect described above, the frequency-domain RA field size is fixed to the frequency-domain RA field size (bitwidth) of the BWP for receiving DCI, even when a BWP different from an activated BWP is scheduled. Consequently, a payload of DCI can be made uniform until the BWP is deactivated. The user terminal can monitor downlink control information, based on a single DCI format. Consequently, in comparison with a case of monitoring a plurality of DCI formats, processing load is reduced. As a result, power consumption can be reduced.

### (Third Aspect)

In a third aspect, the user terminal judges at least one or all of the RA type, the RBG size, and the frequency-domain RA field size of received scheduling DCI, based on a currently active BWP (or configuration information of the active BWP). Accordingly, the size of scheduling DCI monitored by the user terminal is determined by configuration parameters of the currently active BWP.

In the third aspect, when the UE receives DCI including the BWP indication field, the UE judges the RA type, the RBG size, and the frequency-domain RA field size, based on the currently active BWP regardless whether a BWP the same as the active BWP is scheduled by the DCI (self BWP scheduling) or a BWP different from the active BWP is scheduled (cross BWP scheduling) by the DCI.

For this reason, also in the case of cross BWP scheduling, a schedulable maximum bandwidth (for example, a maximum number of PRBs) is the same as a schedulable bandwidth in the currently active BWP. When the resource allocation type (RA type) in the currently active BWP is RA type 0, the resource block group (RBG) size thereof may also be the same as the RBG configured for the currently active BWP.

A DMRS type indicating a pattern (for example, a position of REs/symbols, the number of REs/symbols, or the like) of mapping a DMRS for PDSCH and/or PUSCH, presence/absence and/or a configuration position of an additional DMRS, the number of layers, an MCS (Modulation and Coding Scheme) table used for derivation of a transport block size (TBS) and determination of a modulation scheme, and so on may also be determined based on parameters configured for the currently active BWP.

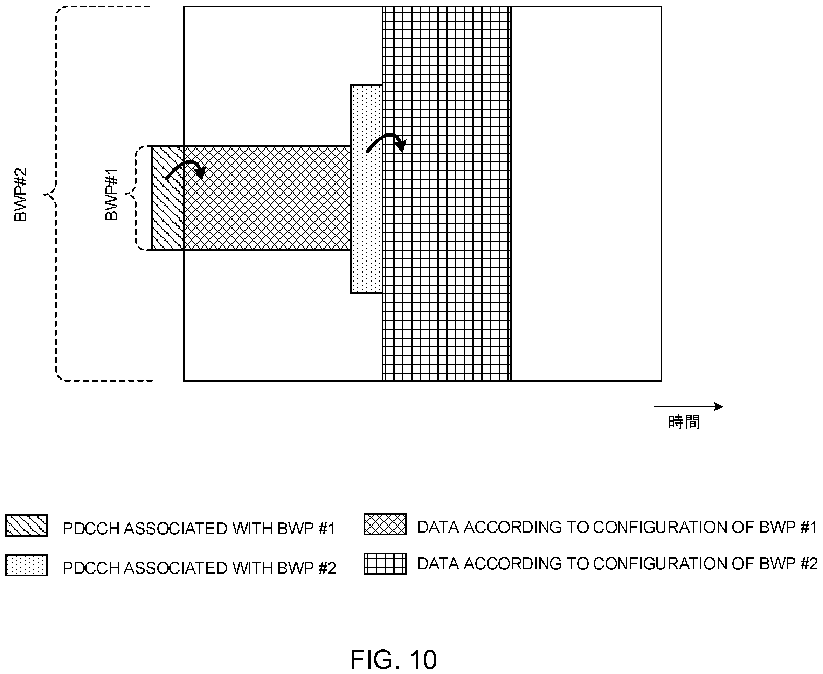

The third aspect will be described with reference to FIG. 10. FIG. 10 is a diagram to show an example of resource allocation according to the third aspect. In the present example, the first active BWP is BWP #1.

The UE monitors PDCCH candidates (search space) in active BWP #1. In the present example, the UE assumes that the UE has detected DCI with the BWP indication field indicating BWP #2 in the PDCCH associated with BWP #1. In this case, the UE may judge that a data channel to be scheduled by the DCI is in accordance with the configuration of BWP #1 (not BWP #2), and may perform transmitting or receiving processes.

In the third aspect, when the UE detects DCI of cross BWP scheduling, the UE may perform data transmission or reception in the currently active BWP, based on the DCI, and then deactivate the currently active BWP and activate the BWP indicated by the BWP indication field of the DCI.

In the example of FIG. 10, the UE performs processing for the data according to the configuration of BWP #1, and then switches the active BWP from BWP #1 to BWP #2. Subsequently, the UE monitors PDCCH candidates in active BWP #2.

In the present example, the UE assumes that the UE has detected DCI with the BWP indication field indicating BWP #2 in the PDCCH associated with BWP #2. In this case, the UE may judge that a data channel to be scheduled by the DCI is in accordance with the configuration of active BWP #2, and may perform transmitting or receiving processes.

According to the third aspect described above, the frequency-domain RA field size of DCI indicating cross BWP scheduling is fixed to the frequency-domain RA field size that is the same as the frequency-domain RA field size of self BWP scheduling. Consequently, a payload of scheduling DCI detected in an active BWP can be made uniform. The user terminal can monitor downlink control information, based on a single DCI format. Consequently, in comparison with a case of monitoring a plurality of DCI formats, processing load is reduced. As a result, power consumption can be reduced.

A schedulable maximum bandwidth is limited to a maximum bandwidth of an active BWP even in a case of cross BWP scheduling, thus eliminating the necessity of retuning (control of retuning can be performed after data transmission and reception is once performed).

### (Fourth Aspect)

In a fourth aspect, at least one of DCI for scheduling of an uplink shared channel (PUSCH) and DCI for scheduling of a downlink shared channel (PDSCH) is used for reporting of only BWP switching without scheduling (resource allocation). Reporting of no indication of resource allocation may be referred to as reporting of empty resource allocation (null assignment).

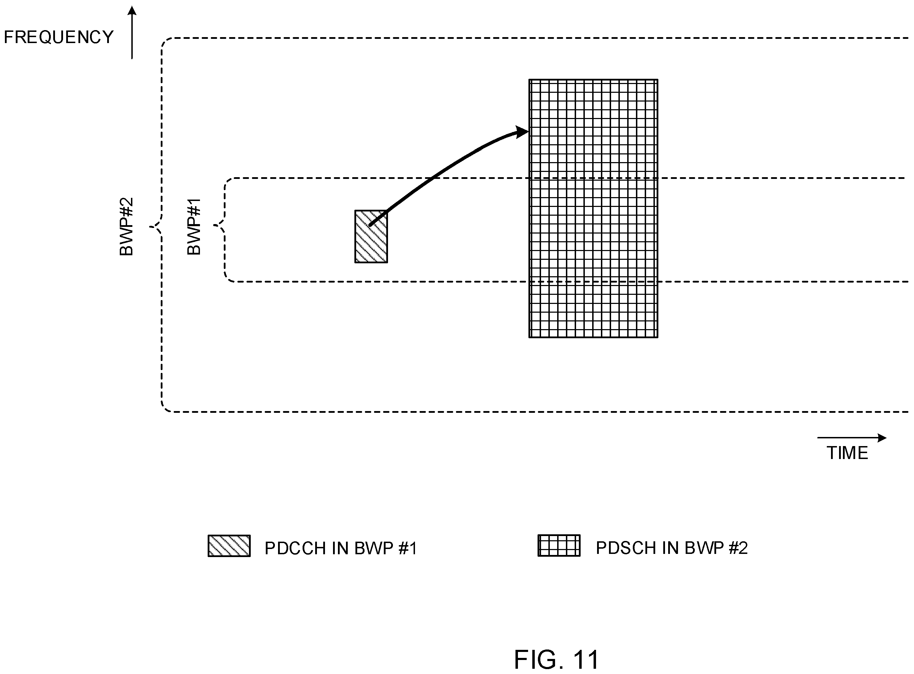

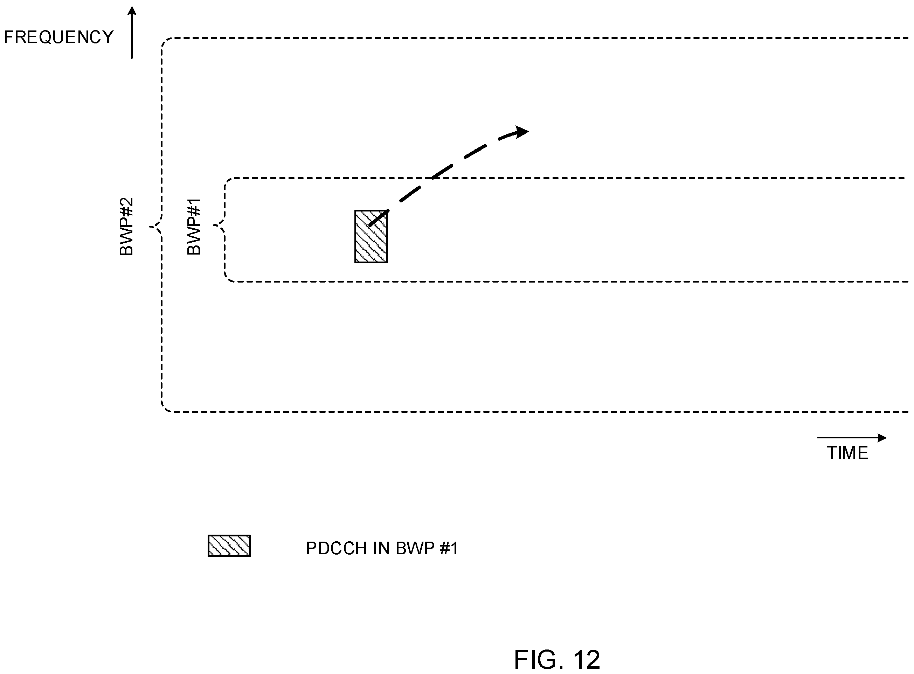

The null assignment will be described with reference to FIGS. 11 and 12. FIG. 11 is a diagram to show an example of BWP switching (cross BWP scheduling) with scheduling, and FIG. 12 is a diagram to show an example of BWP switching without scheduling according to the fourth aspect.

In the example of FIG. 11, as has been described in reference to the first and second aspects, DCI that the UE receives via the PDCCH in BWP #1 indicates PDSCH reception of BWP #2. The UE activates BWP #2 to be scheduled and deactivates BWP #1 that has been activated, and performs scheduled PDSCH reception of BWP #2.

In the example of FIG. 12, DCI that the UE receives via the PDCCH in BWP #1 indicates switching to BWP #2, and does not indicate data transmission and reception in the BWP #2. The UE activates BWP #2 to be scheduled and deactivates BWP #1 that has been activated, but does not perform transmission and reception of data in BWP #2 at this stage in particular.

The DCI for null assignment indicating BWP switching may be transmitted in at least one of a common search space (C-SS) and a UE-specific search space (UE-SS).

The UE-SS may refer to a search space configured for each individual UE, and the C-SS may refer to a search space configured for a plurality of UEs in common. Alternatively, the UE-SS may refer to a search space in which resources to be mapped in the search space are determined based on at least one of a cell-radio network temporary identifier (C-RNTI) and a user terminal identifier (UE-ID (UE Identifier)), and the C-SS may refer to a search space in which resources based neither on the C-RNTI nor the UE-ID are used. Alternatively, the UE-SS may refer to a search space configured based on UE-specific higher layer signaling, and the C-SS may be a search space configured based on UE-common higher layer signaling such as broadcast information.

The RA field of the DCI for null assignment may be configured to a specific value (or a bit stream). Note that the "RA field" in the present disclosure may be interpreted as "one or both of a frequency-domain RA field and a time-domain RA field".

For example, the RA field of the DCI for null assignment may have its values being 0 (all the bits are 0), may have its values being 1 (all the bits are 1), or may be a specific sequence, a specific bit pattern, or the like.

Based on the RA field (and the BWP indication field (BWP indicator field)) included in received DCI, the UE may judge whether or not the DCI is DCI for null assignment.

For example, when the BWP indication field included in the received DCI for DL scheduling corresponds to a BWP different from the currently active BWP (i.e., indicates BWP switching) and RA type 0 is used (for example, configured for the UE by using higher layer signaling), the UE may assume that the DCI is for null assignment, on the condition that the RA field is all '0'.

When the BWP indication field included in the received DCI for DL scheduling corresponds to a BWP different from the currently active BWP and RA type 1 is used (for example, configured for the UE by using higher layer signaling), the UE may assume that the DCI is for null assignment, on the condition that the RA field is all '1'.

### <Use of Field of DCI for Null Assignment Indicating BWP Switching>

When the received DCI for DL scheduling is DCI for null assignment indicating BWP switching, the UE may perform the BWP switching, and discard, unuse, or ignore all the fields included in the DCI. In this case, the UE need not perform generation, transmission, and so on of HARQ-ACK bits associated with reception of the DCI. Note that "all the fields" in the present disclosure may refer to all the fields other than the BWP indication field.

When the received DCI for DL scheduling is DCI for null assignment indicating BWP switching, the UE may perform the BWP switching, and discard, unuse, or ignore all the fields other than a field associated with an HARQ-ACK feedback included in the DCI. In this case, the UE may perform generation, transmission, and so on of HARQ-ACK bits associated with reception of the DCI, based on the field associated with the HARQ-ACK feedback.

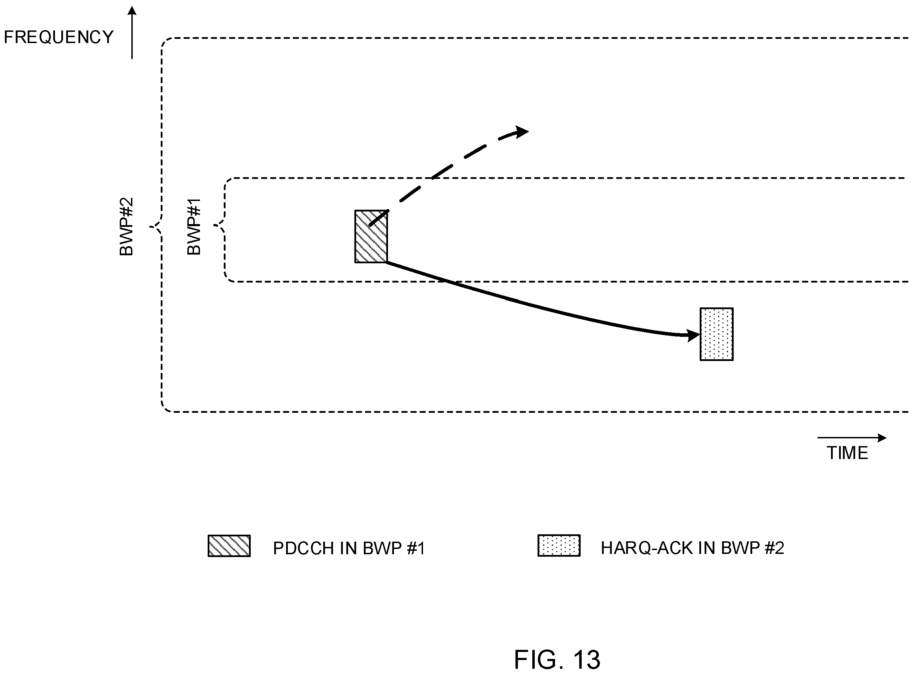

FIG. 13 is a diagram to show an example of HARQ-ACK transmission for DL DCI for null assignment indicating BWP switching according to the fourth aspect. In the present example, in a similar manner to the example of FIG. 12, the UE receives indication of switching to BWP #2 and receives no indication of data transmission and reception in the BWP #2 through DCI received in the PDCCH in BWP #1. In this case, the UE may transmit an HARQ-ACK for reception of the DCI in BWP #2 after switching, based on a field associated with an HARQ-ACK feedback for the DCI.

Note that, for the HARQ-ACK feedback associated with reception of the DCI, the UE may perform control (processing) similar to that performed for an HARQ-ACK for the PDCCH for releasing semi-persistent scheduling (SPS).

For example, when the UE supports up to one unicast PDSCH for each slot and is configured with a semi-static HARQ-ACK codebook, the UE may assume any one of the following:
(1) The UE generates one HARQ-ACK bit for DCI for null assignment indicating BWP switching for each slot (bundling with a unicast PDSCH is also applicable);
(2) The UE need not expect (assume) reception of both of the PDSCH and the DCI for null assignment indicating BWP switching in the same slot;
(3) When the UE receives both of the PDSCH and the DCI for null assignment indicating BWP switching in the same slot, the UE may transmit two HARQ-ACK bits for these. Otherwise, the UE may transmit up to one HARQ-ACK bit; and
(4) The UE may transmit MAC CEs (Medium Access Control Control Elements) by using the PUSCH for an ACK for the DCI for null assignment indicating BWP switching.

Note that the field associated with the HARQ-ACK feedback may be, for example, at least one of a field related to feedback timing of an HARQ-ACK ('PDSCH-to-HARQ feedback timing indicator' field), a transmission power control (TPC) command field for a scheduled PUCCH ('TPC command for scheduled PUCCH' field), a PUCCH resource indicator field ('PUCCH resource indicator' field), and so on.

When the received DCI for UL scheduling is DCI for null assignment indicating BWP switching, the UE may perform the BWP switching, and discard, unuse, or ignore all the fields included in the DCI. In this case, the UE need not perform generation, transmission, and so on of HARQ-ACK bits associated with reception of the DCI.

### <Format of DCI for Null Assignment Indicating BWP Switching>

The DCI for null assignment indicating BWP switching may be limited to non-fallback DCI. For example, the DCI for null assignment indicating BWP switching may be DCI format 0_1 only, may be DCI format 1_1 only, or may be both of these. Note that the DCI for null assignment indicating BWP switching may include fallback DCI.

Here, the non-fallback DCI may be, for example, DCI transmitted in the UE-SS, and may be DCI with its configuration (contents, a payload, and so on) being configurable through UE-specific higher layer signaling (for example, RRC signaling). The non-fallback DCI may be CRC (Cyclic Redundancy Check) scrambled with a C-RNTI.

The fallback DCI may be, for example, DCI transmitted in at least one of the C-SS and the UE-SS, and may be DCI with its configuration unconfigurable through UE-specific higher layer signaling. Note that, as for the fallback DCI as well, configuration (contents, a payload, and so on) may be configurable through UE-common higher layer signaling (for example, broadcast information, system information, and so on).

### (Radio Communication System)

Hereinafter, a structure of a radio communication system according to the present embodiment will be described. In the radio communication system, the radio communication method according to each of the aspects described above is applied. Note that the radio communication method according to each aspect described above may be employed independently or may be employed in combination.

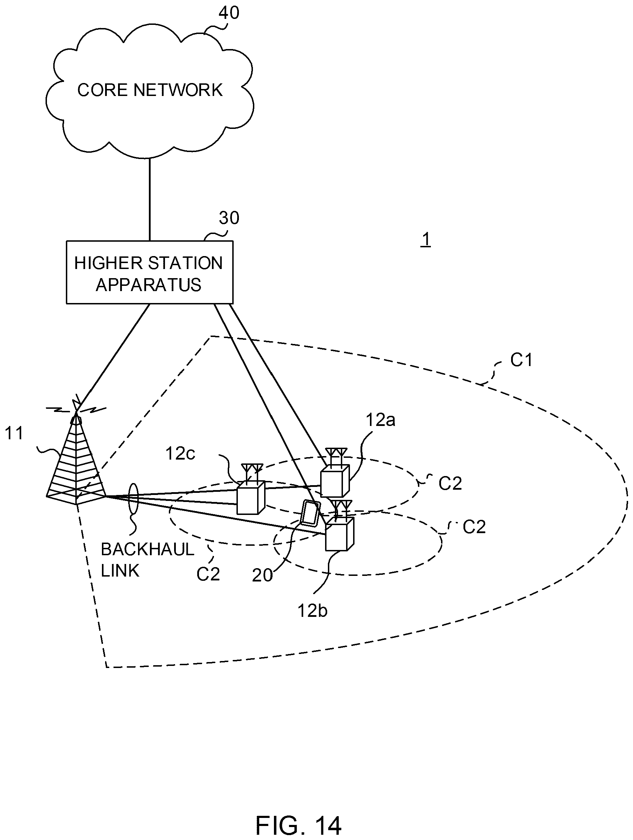

FIG. 14 is a diagram to show an example of a schematic structure of the radio communication system according to the present embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit. Note that the radio communication system 1 may be referred to as SUPER 3G, LTE-A (LTE-Advanced), IMT-Advanced, 4G, 5G, FRA (Future Radio Access), NR (New RAT), and so on.

The radio communication system 1 shown in FIG. 14 includes a radio base station 11 that forms a macro cell C1, and radio base stations 12a to 12c that form small cells C2, which are placed within the macro cell C1 and which are narrower than the macro cell C1. User terminals 20 are placed in the macro cell C1 and in each small cell C2. Different numerologies may be applied to different cells. Note that the numerology may be at least one of a subcarrier spacing, a symbol length, a cyclic prefix (CP) length, the number of symbols of each transmission time interval (TTI), and a time length of the TTI. Furthermore, a slot may be a time unit based on numerology employed by the user terminal. The number of symbols of each slot may be defined according to a subcarrier spacing.

The user terminals 20 can connect with both the radio base station 11 and the radio base stations 12. It is assumed that the user terminals 20 use the macro cell C1 and the small cells C2 using different frequencies at the same time by means of CA or DC. The user terminals 20 can execute CA or DC by using a plurality of cells (CCs) (for example, two or more CCs). The user terminal can use a licensed band CC and an unlicensed band CC as the plurality of cells.

The user terminals 20 can perform communication by using time division duplex (TDD) or frequency division duplex (FDD) in each cell (carrier). The cell of TDD and the cell of FDD may be respectively referred to as a TDD carrier (frame configuration second type) and an FDD carrier (frame configuration first type), for example.

In each cell (carrier), a slot (also referred to as a TTI, a normal TTI, a long TTI, a normal subframe, a long subframe, a subframe, or the like) having a relatively long time length (for example, 1 ms) and/or a slot (also referred to as a mini-slot, a short TTI, a short subframe, or the like) having a relatively short time length may be used. Slots of two or more time lengths may be used in each cell.

Between the user terminals 20 and the radio base station 11, communication can be carried out by using a carrier of a relatively low frequency band (for example, 2 GHz) and a narrow bandwidth (referred to as, for example, an "existing carrier," a "Legacy carrier" and so on). Meanwhile, between the user terminals 20 and the radio base stations 12, a carrier of a relatively high frequency band (for example, 3.5 GHz, 5 GHz, 30 to 70 GHz, and so on) and a wide bandwidth may be used, or the same carrier as that used between the user terminals 20 and the radio base station 11 may be used. Note that the structure of the frequency band for use in each radio base station is by no means limited to these. One or more BWPs may be configured for the user terminal 20. The BWP includes at least a part of a carrier.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals but stationary communication terminals. The user terminal 20 can perform inter-terminal communication (D2D) with another user terminal 20.

In the radio communication system 1, as a radio access scheme, OFDMA (orthogonal frequency division multiple access) can be applied to the downlink (DL), and SC-FDMA (single carrier frequency division multiple access) can be applied to the uplink (UL). OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and OFDMA may be used in the UL. SC-FDMA can be applied to a sidelink (SL) used for the inter-terminal communication.

In the radio communication system 1, a DL data channel (also referred to as a PDSCH (Physical Downlink Shared Channel), a DL shared channel, and so on), which is used by each user terminal 20 on a shared basis, a broadcast channel (PBCH (Physical Broadcast Channel)), L1/L2 control channels and so on, are used as DL channels. DL data (at least one of user data, higher layer control information, SIBs (System Information Blocks) and so on) is communicated on the PDSCH. The MIBs (Master Information Blocks) are communicated on the PBCH.

The L1/L2 control channels include DL control channels (a PDCCH (Physical Downlink Control Channel) and/or an EPDCCH (Enhanced Physical Downlink Control Channel)), a PCFICH (Physical Control Format Indicator Channel), a PHICH (Physical Hybrid-ARQ Indicator Channel) and so on. Downlink control information (DCI), including PDSCH and PUSCH scheduling information, and so on are communicated on the PDCCH. The number of OFDM symbols to use for the PDCCH is communicated on the PCFICH. The EPDCCH is frequency-division multiplexed with the PDSCH and used to communicate DCI and so on, like the PDCCH. Transmission confirmation information (also referred to as an A/N, a HARQ-ACK, an HARQ-ACK bit, an A/N codebook, or the like) of the PUSCH can be communicated on the

### PHICH.

In the radio communication system 1, a UL data channel (also referred to as a PUSCH (Physical Uplink Shared Channel), a UL shared channel, and so on), which is used by each user terminal 20 on a shared basis, a UL control channel (PUCCH (Physical Uplink Control Channel)), a random access channel (PRACH (Physical Random Access Channel)) and so on are used as UL channels. UL data (user data and/or higher layer control information) is communicated on the PUSCH. Uplink control information (UCI) including at least one of transmission confirmation information (A/N or HARQ-ACK) channel state information (CSI) of the PDSCH and so on is communicated on the PUSCH or the PUCCH. By means of the PRACH, random access preambles for establishing connections with cells can be communicated.

### <Radio Base Station>

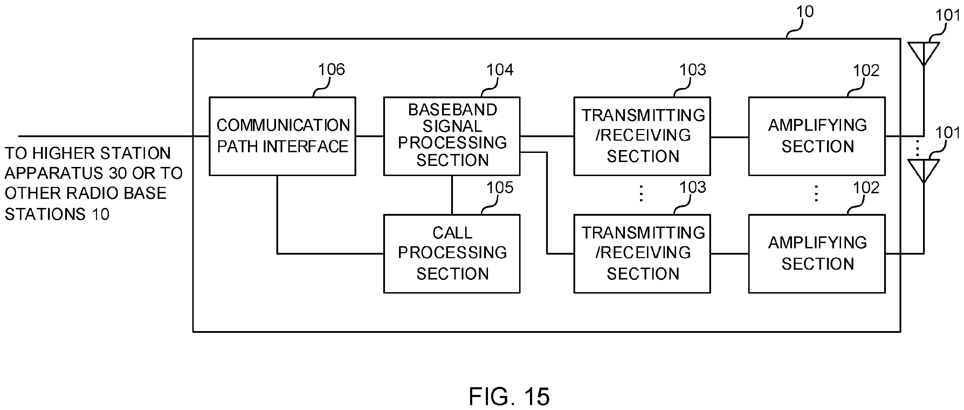

FIG. 15 is a diagram to show an example of an overall structure of the radio base station according to the present embodiment. A radio base station 10 includes a plurality of transmitting/receiving antennas 101, amplifying sections 102, transmitting/receiving sections 103, a baseband signal processing section 104, a call processing section 105, and a communication path interface 106. Note that the radio base station 10 may be configured to include one or more transmitting/receiving antennas 101, one or more amplifying sections 102, and one or more transmitting/receiving sections 103. The radio base station 10 may serve as a "receiving apparatus" in the UL, and may constitute a "transmitting apparatus" in the DL.

User data to be transmitted from the radio base station 10 to the user terminal 20 by the downlink is input from the higher station apparatus 30 to the baseband signal processing section 104, via the communication path interface 106.

In the baseband signal processing section 104, the user data is subjected to transmission processes, such as at least one of a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) process), scheduling, transport format selection, channel coding, rate matching, scrambling, an inverse fast Fourier transform (IFFT) process, and a precoding process, and the result is forwarded to each transmitting/receiving section 103. Furthermore, downlink control signals are also subjected to transmission processes such as channel coding and/or inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted with transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The transmitting/receiving sections 103 convert the received signals into the baseband signal through frequency conversion and outputs to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs at least one of call processing such as setting up and releasing for communication channels, managing of the state of the radio base station 10, and managing of the radio resources.

The communication path interface 106 transmits and/or receives signals to and/or from the higher station apparatus 30 via a certain interface. The communication path interface 106 may transmit and/or receive signals (backhaul signaling) with neighboring radio base stations 10 via an inter-base station interface (for example, an optical fiber in compliance with the CPRI (Common Public Radio Interface) and an X2 interface).

The transmitting/receiving section 103 transmit a DL signal (for example, at least one of a DL control signal (also referred to as a DL control channel, DCI, or the like), a DL data signal (also referred to as a DL data channel, DL data, or the like), and a reference signal). The transmitting/receiving sections 103 receive a UL signal (for example, at least one of a UL control signal (also referred to as a UL control channel, UCI, or the like), a UL data signal (also referred to as a UL data channel, UL data, or the like), and a reference signal).

The transmitting/receiving section 103 may transmit higher layer control information (for example, MAC CEs and/or control information carried on RRC signaling).

Each of the transmitting/receiving sections 103 may transmit DCI according to a DCI format defined in at least one of the first to fourth aspects described above.

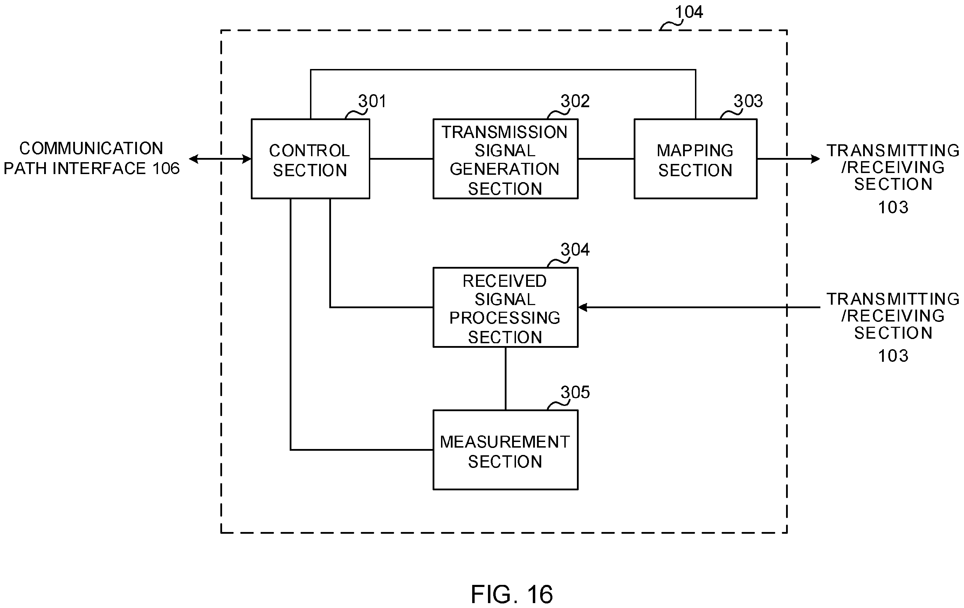

FIG. 16 is a diagram to show an example of a functional structure of the radio base station according to the present embodiment. Note that, FIG. 16 primarily shows functional blocks that pertain to characteristic parts of the present embodiment, and it is assumed that the radio base station 10 includes other functional blocks that are necessary for radio communication as well. As shown in FIG. 16, the baseband signal processing section 104 includes a control section 301, a transmission signal generation section 302, a mapping section 303, a received signal processing section 304, and a measurement section 305.

The control section 301 controls the whole of the radio base station 10. For example, the control section 301 controls at least one of generation of a DL signal in the transmission signal generation section 302, mapping of a DL signal in the mapping section 303, a receiving process (for example, demodulation and so on) of a UL signal in the received signal processing section 304, and measurement in the measurement section 305. The control section 301 may control scheduling of a data channel (including a DL data channel and/or a UL data channel).

The control section 301 may control a transmission direction of each symbol in a time unit (for example, a slot) being a scheduling unit of a DL data channel. Specifically, the control section 301 may control generation and/or transmission of slot format related information (SFI) indicating DL symbols and/or UL symbols in a slot.

The control section 301 may perform control so as to configure one or more BWPs, and perform radio communication with the user terminal 20 by means of TDD (time division duplex) or FDD (frequency division duplex) by using the configured BWP(s).

The control section 301 may perform scheduling of the BWP by using a DCI format defined in the aspects described above.

The control section 301 may perform control so as to use the first BWP to transmit downlink control information including information indicating the second BWP being different from the first BWP to the user terminal 20. In this case, the control section 301 may assume that resources to be allocated in the downlink control information are judged in the user terminal 20, based on BWP configuration information of the first BWP.

The control section 301 may assume that a maximum size of resources that can be allocated in DCI that is transmitted in the first BWP and that includes the information indicating the second BWP is the same as the maximum size of resources that can be allocated in downlink control information that is DCI transmitted in the first BWP and that includes information indicating the first BWP.

When a resource allocation field of the DCI including the information indicating the second BWP being different from the first BWP indicates a specific value, the control section 301 need not perform resource allocation corresponding to the resource allocation field for the second BWP.

The control section 301 can be constituted with a controller, a control circuit or control apparatus that can be described based on general understanding of the technical field to which the present disclosure pertains.

Based on commands from the control section 301, the transmission signal generation section 302 may generate a DL signal (including at least one of DL data, DCI, a DL reference signal, control information carried on higher layer signaling), and output the generated DL signal to the mapping section 303.

The transmission signal generation section 302 can be constituted with a signal generator, a signal generation circuit or signal generation apparatus that can be described based on general understanding of the technical field to which the present disclosure pertains.

The mapping section 303 maps the DL signals generated in the transmission signal generation section 302 to certain radio resources, based on commands from the control section 301, and outputs these to the transmitting/receiving sections 103. For example, the mapping section 303 maps a reference signal to certain radio resources by using a mapping pattern that is determined by the control section 301.

The mapping section 303 can be constituted with a mapper, a mapping circuit or mapping apparatus that can be described based on general understanding of the technical field to which the present disclosure pertains.

The received signal processing section 304 performs a receiving process (for example, at least one of demapping, demodulation, and decoding, and so on) for a UL signal transmitted from the user terminal 20. Specifically, the received signal processing section 304 may output a received signal and/or a signal that has been subjected to a receiving process to the measurement section 305.

The received signal processing section 304 can be constituted with a signal processor, a signal processing circuit or signal processing apparatus that can be described based on general understanding of the technical field to which the present disclosure pertains. The received signal processing section 304 can constitute the receiving section according to the present disclosure.

For example, the measurement section 305 may measure channel quality of the UL, based on received power of a reference signal (for example, RSRP (Reference Signal Received Power)) and/or received quality thereof (for example, RSRQ (Reference Signal Received Quality)). The measurement results may be output to the control section 301.

### <User Terminal>

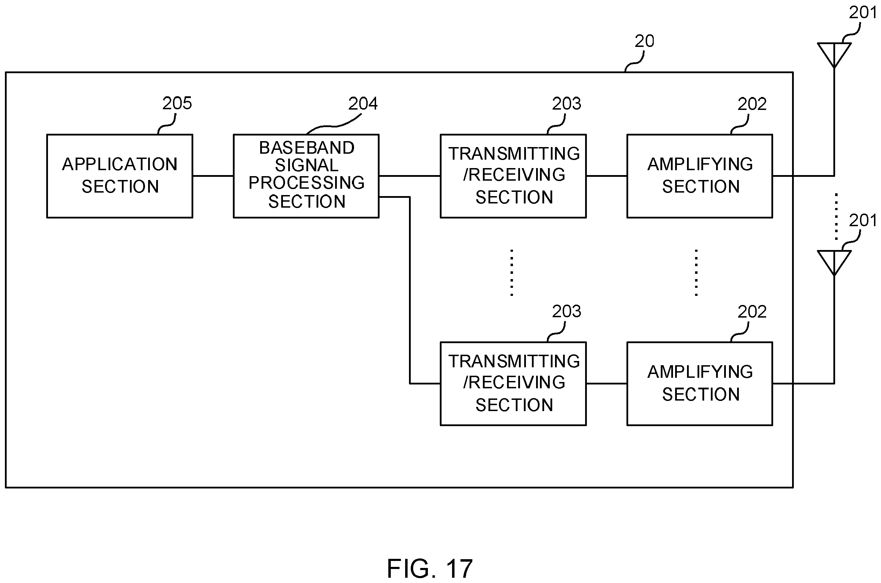

FIG. 17 is a diagram to show an example of an overall structure of a user terminal according to the present embodiment. A user terminal 20 includes a plurality of transmitting/receiving antennas 201 for MIMO transmission, amplifying sections 202, transmitting/receiving sections 203, a baseband signal processing section 204, and an application section 205. The user terminal 20 may serve as a "transmitting apparatus" in the UL, and may constitute a "receiving apparatus" in the DL.

Radio frequency signals that are received in the plurality of transmitting/receiving antennas 201 are amplified in respective amplifying sections 202. Each of the transmitting/receiving sections 203 receives the DL signals amplified in the amplifying sections 202. The transmitting/receiving sections 203 convert the received signals into baseband signals through frequency conversion, and output the baseband signals to the baseband signal processing section 204.

The baseband signal processing section 204 performs, on each input baseband signal, at least one of an FFT process, error correction decoding, a retransmission control receiving process, and so on. The DL data is forwarded to the application section 205. The application section 205 performs processes related to higher layers above the physical layer and the MAC layer, and so on.

Meanwhile, the UL data is input from the application section 205 to the baseband signal processing section 204. The baseband signal processing section 204 performs at least one of a retransmission control process (for example, an HARQ process), channel coding, rate matching, puncturing, a discrete Fourier transform (DFT) process, an IFFT process and so on, and the result is forwarded to each of the transmitting/receiving sections 203. As for UCI (for example, at least one of an A/N of a DL signal, channel state information (CSI), and a scheduling request (SR), and so on) as well, at least one of channel coding, rate matching, puncturing, a DFT process, an IFFT process, and so on is performed, and the result is forwarded to each of the transmitting/receiving sections 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

The transmitting/receiving sections 203 receive a DL signal (for example, at least one of a DL control signal (also referred to as a DL control channel, DCI, or the like), a DL data signal (also referred to as a DL data channel, DL data, or the like), and a reference signal). The transmitting/receiving sections 203 transmits a UL signal (for example, at least one of a UL control signal (also referred to as a UL control channel, UCI, or the like), a UL data signal (also referred to as a UL data channel, UL data, or the like), and a reference signal).

The transmitting/receiving sections 203 may receive higher layer control information (for example, MAC CEs and/or control information carried on RRC signaling).

The transmitting/receiving sections 203 may perform transmission and reception of signals and/or information by means of TDD (time division duplex) by using a DL/UL frequency band pair (DL/UL BWP pair) including a frequency band for the UL and a frequency band for the DL configured in the frequency direction within a carrier.

The transmitting/receiving sections 203 may receive DCI according to a DCI format defined in the aspects described above.

The transmitting/receiving sections 203 can be constituted with transmitters/receivers, transmitting/receiving circuits or transmitting/receiving apparatus that can be described based on general understanding of the technical field to which the present disclosure pertains. The transmitting/receiving sections 203 may be structured as a transmitting/receiving section in one entity, or may be constituted with a transmitting section and a receiving section.

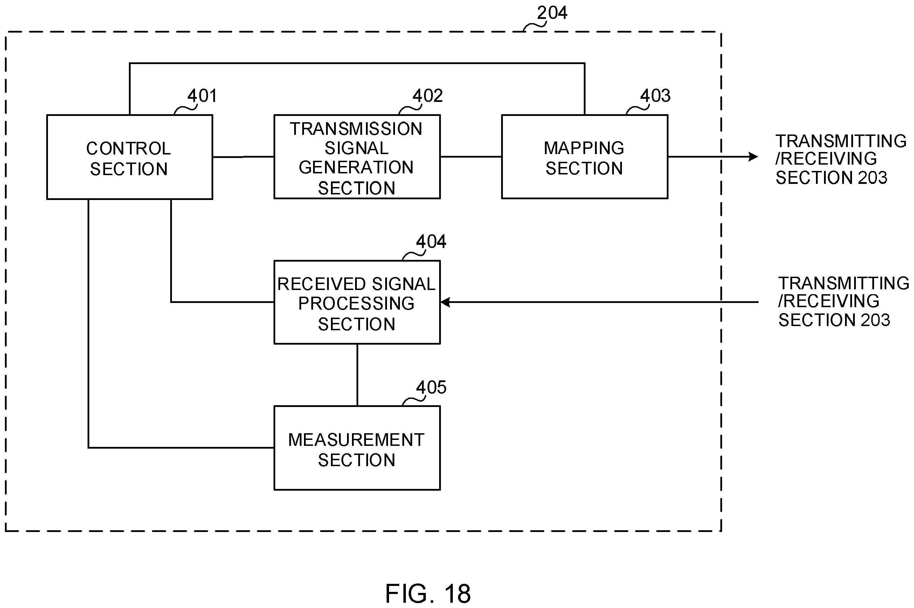

FIG. 18 is a diagram to show an example of a functional structure of a user terminal according to the present embodiment. Note that, FIG. 18 primarily shows functional blocks that pertain to characteristic parts of the present embodiment, and it is assumed that the user terminal 20 includes other functional blocks that are necessary for radio communication as well. As shown in FIG. 18, the baseband signal processing section 204 included in the user terminal 20 includes a control section 401, a transmission signal generation section 402, a mapping section 403, a received signal processing section 404, and a measurement section 405.

The control section 401 controls the whole of the user terminal 20. For example, the control section 401 controls at least one of generation of a UL signal in the transmission signal generation section 402, mapping of a UL signal in the mapping section 403, a receiving process of a DL signal in the received signal processing section 404, and measurement in the measurement section 405.

The control section 401 may perform control so as to configure one or more BWPs, and perform radio communication with the radio base station 10 by means of TDD (time division duplex) or FDD (frequency division duplex) by using the configured BWP(s).

The control section 401 may judge resources of a scheduled BWP by using a DCI format defined in the aspects described above.

The transmitting/receiving sections 203 may use the first BWP in a partial frequency band (BWP) configured within a carrier to receive downlink control information, and the control section 401 may judge resources of the second BWP being different from the first BWP by using a resource allocation field (RA field) having a size configured (or selected) based on a certain BWP out of the plurality of BWPs in the downlink control information.

The certain BWP may be a BWP having the widest bandwidth out of the plurality of BWPs. The certain BWP may be the first BWP.

When the control section 401 receives the downlink control information, the control section 401 may activate the second BWP, and deactivate the first BWP.

The control section 401 may monitor the downlink control information of the same size, regardless of whether an activated BWP is the first BWP or the second BWP.

The transmitting/receiving sections 203 may use the first BWP to receive downlink control information (which may be referred to as, for example, DCI for scheduling, a DL assignment (DL DCI), a UL grant (UL DCI), and so on) including information indicating the second BWP being different from the first BWP. In this case, the control section 401 may judge resources to be allocated in the downlink control information (resources to be specified in cross BWP scheduling), based on BWP configuration information of the first BWP.

The control section 401 may assume that a maximum size of resources that can be allocated in the downlink control information is the same as the maximum size of resources that can be allocated in downlink control information including information indicating the first BWP.

The control section 401 may perform control so as to process resources to be allocated in the downlink control information, and then activate the second BWP.

When a resource allocation field of the DCI including the information indicating the second BWP being different from the first BWP indicates a specific value, the control section 401 may activate the second BWP and perform only BWP switching without performing a transmitting and receiving process for the second BWP based on the resource allocation field. For example, the specific value may correspond to such a value that a bit stream of a field is all '0', all '1', or the like. The DCI may be referred to as DCI for null assignment indicating BWP switching.

When the resource allocation field of the DCI indicates a specific value, the control section 401 may ignore a field other than a field (BWP indication field) corresponding to the information indicating the second BWP.

When the resource allocation field of the DCI indicates a specific value and the DCI is control information (for example, DCI format 1_1) used for scheduling of a downlink shared channel (PDSCH), the control section 401 may ignore a field other than a field corresponding to the information indicating the second BWP and a field associated with an HARQ-ACK (Hybrid Automatic Repeat reQuest Acknowledgement).

The control section 401 can be constituted with a controller, a control circuit or control apparatus that can be described based on general understanding of the technical field to which the present disclosure pertains.

Based on commands from the control section 401, the transmission signal generation section 402 generates (for example, performs coding, rate matching, puncturing, modulation, or the like on) retransmission control information or the like of a UL signal and a DL signal, and outputs the result to the mapping section 403. The transmission signal generation section 402 can be constituted with a signal generator, a signal generation circuit or signal generation apparatus that can be described based on general understanding of the technical field to which the present disclosure pertains.

The mapping section 403 can be constituted with a mapper, a mapping circuit or mapping apparatus that can be described based on general understanding of the technical field to which the present disclosure pertains.

The received signal processing section 404 performs a receiving process (for example, at least one of demapping, demodulation, and decoding, and so on) of a DL signal. For example, the received signal processing section 404 may demodulate a DL data channel by using a reference signal in a mapping pattern that is determined by the control section 401.

The received signal processing section 404 may output a received signal and/or a signal that has been subjected to a receiving process to the control section 401 and/or the measurement section 405. For example, the received signal processing section 404 outputs higher layer control information carried on higher layer signaling, L1/L2 control information (for example, a UL grant and/or a DL assignment), and so on to the control section 401.

The received signal processing section 404 can be constituted with a signal processor, a signal processing circuit or signal processing apparatus that can be described based on general understanding of the technical field to which the present disclosure pertains. The received signal processing section 404 can constitute the receiving section according to the present disclosure.

The measurement section 405 measures a channel state, based on a reference signal (for example, a CSI-RS) from the radio base station 10, and outputs measurement results to the control section 401. Note that the measurement of the channel state may be performed for each CC.

The measurement section 405 can be constituted with a signal processor, a signal processing circuit or signal processing apparatus and a measurer, a measurement circuit or measurement apparatus that can be described based on general understanding of the technical field to which the present disclosure pertains.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus.

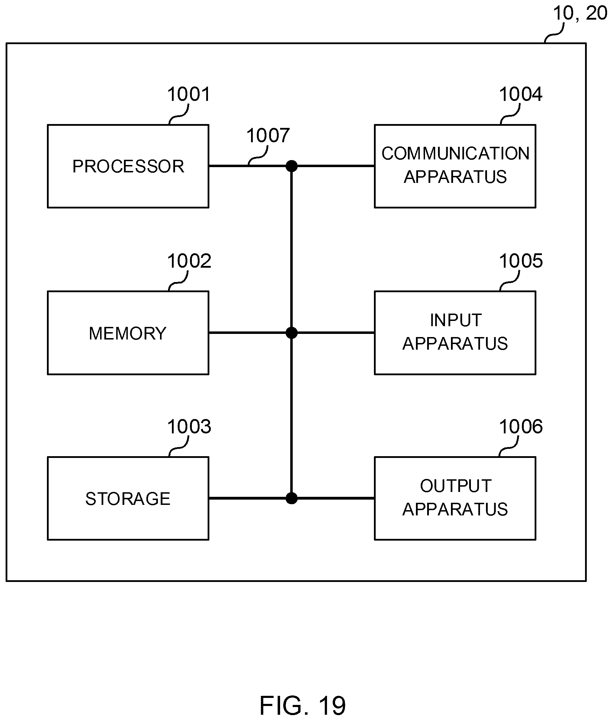

For example, a radio base station, a user terminal, and so on according to one embodiment of the present disclosure may function as a computer that executes the processes of the radio communication method of the present disclosure. FIG. 19 is a diagram to show an example of a hardware structure of the radio base station and the user terminal according to one embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, at least one of "channels" and "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "transmission time interval (TTI)," a plurality of consecutive subframes may be referred to as a "TTI" or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or the like, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain.

Also, an RB may include one or a plurality of symbols in the time domain, and may be one slot, one mini-slot, one subframe, or one TTI in length. One TTI and one subframe each may be constituted of one or a plurality of resource blocks.

Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure may be used interchangeably.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," a "bandwidth part (BWP)," and so on can be used interchangeably. The base station may be referred to as the terms such as a "macro cell," a small cell," a "femto cell," a "pico cell," and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation.

Furthermore, the radio base station in the present disclosure may be interpreted as a user terminal. For example, each aspect/embodiment of the present disclosure may be applied to the structure that replaces a communication between a radio base station and a user terminal with a communication between a plurality of user terminals (for example, which may be referred to as "D2D (Device-to-Device)," "V2X (Vehicle-to-Everything)," and the like). In this case, the user terminals 20 may have the functions of the radio base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as a radio base station. In this case, the radio base stations 10 may have the functions of the user terminals 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables, printed electrical connections, and so on, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." The terms "separate," "be coupled" and so on may be interpreted similarly.

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that uses a first BWP in a partial frequency band (BWP (Bandwidth Part)) configured within a carrier to receive downlink control information including information indicating a second BWP being different from the first BWP; and
a control section that, when a resource allocation field of the downlink control information indicates a specific value, activates the second BWP, and does not perform a transmitting and receiving process for the second BWP based on the resource allocation field.

2. The user terminal according to claim 1, wherein
when the resource allocation field of the downlink control information indicates a specific value, the control section ignores a field other than a field corresponding to the information indicating the second BWP.

3. The user terminal according to claim 1 or 2, wherein
when the resource allocation field of the downlink control information indicates a specific value and the downlink control information is control information used for scheduling of a downlink shared channel, the control section ignores a field other than a field corresponding to the information indicating the second BWP and a field associated with an HARQ-ACK (Hybrid Automatic Repeat reQuest Acknowledgement).

4. A radio base station comprising:
a transmitting section that uses a first BWP in a partial frequency band (BWP (Bandwidth Part)) configured within a carrier to transmit downlink control information including information indicating a second BWP being different from the first BWP; and
a control section that, when a resource allocation field of the downlink control information indicates a specific value, does not perform resource allocation corresponding to the resource allocation field for the second BWP.
